# FASCICULE DE BREVET EUROPEEN

(11) **EP 0 550 348 B1**
(45) Date de publication et mention de la délivrance du brevet: **26.02.1997**
(21) Numéro de dépôt: 92420425.8
(22) Date de dépôt: 18.11.1992
(51) Int. Cl.: H02J 9/06, H02J 1/14

(54) **Système de distribution d'énergie électrique de haute qualité**
Elektrisches Energieverteilungssystem von höher Qualität
High quality electrical power distribution system

(30) Priorité: 27.11.1991 FR 9114768
(43) Date de publication de la demande: 07.07.1993
(73) Titulaire: SCHNEIDER ELECTRIC SA, 92100 Boulogne Billancourt (FR)
(72) Inventeur: Fiorina, Jean-Noel, F-38050 Grenoble Cedex 9 (FR); Pillet, Jean-Jacques, F-38050 Grenoble Cedex 9 (FR)
(74) Mandataire: Jouvray, Marie-Andrée

(56) Documents cités:
- WO-A-90/09050
- GB-A- 2 111 326
- GB-A- 2 169 160
- REVUE GENERALE DE L'ELECTRICITE. no. 2, Février 1989, PARIS FR pages 29 - 34 DANNER ET AL. 'Alimentation statique sans interruption à sortie continue'
- REVUE GENERALE DE L'ELECTRICITE. no. 2, Février 1989, PARIS FR pages 17 - 22 CHIGOLET 'Les applications des alimentations sans interruption dans les télécommunications'

## Description

L'invention concerne un système de distribution d'énergie électrique de haute qualité à une pluralité d'utilisateurs à partir d'un réseau de distribution d'énergie électrique en courant alternatif.
Un nombre de plus en plus grand d'appareils, notamment dans les domaines informatique et électronique nécessite une alimentation en énergie électrique de haute qualité, c'est à dire essentiellement une alimentation toujours disponible, adaptée à l'appareil et insensible aux perturbations.

Actuellement le problème de la disponibilité est généralement résolu au moyen d'une alimentation sans coupure ou onduleur, interposée entre le réseau alternatif (50Hz ou 60Hz) et l'appareil concerné. L'énergie est distribuée à l'appareil par l'onduleur sous forme de courant alternatif de fréquence et d'amplitude prédéterminées, généralement du même ordre que celles du réseau initial. L'onduleur comporte une batterie, normalement chargée par le réseau, qui pallie aux défaillances du réseau pendant une durée limitée, quelques dizaines de minutes par exemple. Pour pallier aux défaillances de longue durée du réseau, un groupe électrogène ou un second réseau peuvent, en configuration de secours, être connectés à l'entrée de l'onduleur à la place du réseau devenu indisponible.

Pour éviter l'emploi, coûteux et encombrant, d'un onduleur par appareil, il est souvent prévu un seul onduleur, de puissance adaptée, associé à une pluralité d'appareils, ou charges, connectés en parallèle à la sortie de l'onduleur. Si l'énergie fournie est bien disponible, sa qualité n'est pas toujours satisfaisante. En effet, dans cette configuration certaines charges peuvent créer des perturbations affectant les charges connectées en parallèle. Ces perturbations réciproques peuvent être limitées par l'utilisation, en amont de chacun des appareils, de filtres anti-harmoniques et/ou de transformateurs d'isolement, ce qui rend de nouveau l'installation coûteuse et complexe.

L'invention a pour but un système de distribution d'énergie electrique de haute qualité ne présentant pas ces inconvénients.

Par ailleurs, le document EP-A-409.226 décrit un système de contrôle de l'alimentation électrique d'une pluralité de charges, par exemple dans un bâtiment. Ce système comporte une pluralité de convertisseurs connectés aux charges par une matrice de connexion. L'alimentation des convertisseurs peut se faire à partir d'un réseau de courant continu. Des moyens de stockage d'énergie permettent de pallier à une défaillance du réseau alternatif. Deux circuits de communication, dont l'un à haute vitesse, permettent la gestion du sytème par un ordinateur qui commande les convertisserurs et la matrice de connexion de manière à optimiser l'alimentation des charges en fonction de leurs exigences.

Ce but est atteint par un système selon la revendication 1.

Ce système est plus particulièrement adapté à la distribution d'énergie électrique de haute qualité dans un immeuble ou sur un site industriel ou tertiaire. Le système comporte un module central pour l'immeuble ou pour le site, et le bus de distribution de courant continu met cette énergie à la disposition de chaque utilisateur. Un ou plusieurs modules terminaux, de moindre puissance que le module central, donc peu encombrants, peuvent être prévus dans chaque bureau, chaque module terminal étant adapté aux besoins particuliers de l'utilisateur, notamment en terme de fréquence (alternatif:30Hz,60Hz ou autre; continu) et d'amplitude (220V ou autre). Un module terminal peut être destiné à l'alimentation d'un ou plusieurs appareils sensibles. Les modules terminaux assurent un isolement fonctionnel total entre des utilisateurs connectés à différents modules terminaux et garantissent, dans des conditions normales d'utilisation, la qualité de la tension fournie à l'utilisateur. En pratique, chaque bureau d'un immeuble sera alimenté d'une part par le réseau alternatif classique, et d'autre part par le réseau continu de haute qualité. Un tel système a pour avantage d'être évolutif, le nombre et le type de modules terminaux connectés au bus de distribution de courant continu pouvant facilement être adaptés en fonction des besoins.

D'autres avantages et caractéristiques ressortiront plus clairement de l'exposé qui va suivre de modes de réalisation particuliers de l'invention, donnés à titre d'exemple non limitatifs et représentés aux dessins annexés sur lesquels:

La figure 1 illustre de façon très schématique un système selon l'invention.

La figure 2 représente un mode de réalisation particulier du module central du système selon la figure 1.

Les figures 3 et 4 représentent deux modes de réalisation particuliers de modules terminaux du système selon la figure 1.

La figure 5 représente un coffret de raccordement d'un module terminal au bus de distribution.

La figure 6 illustre un système de distribution redondant.

La figure 7 représente un module central redondant.

La figure 8 illustre, de manière schématique, un autre mode de réalisation particulier du système.

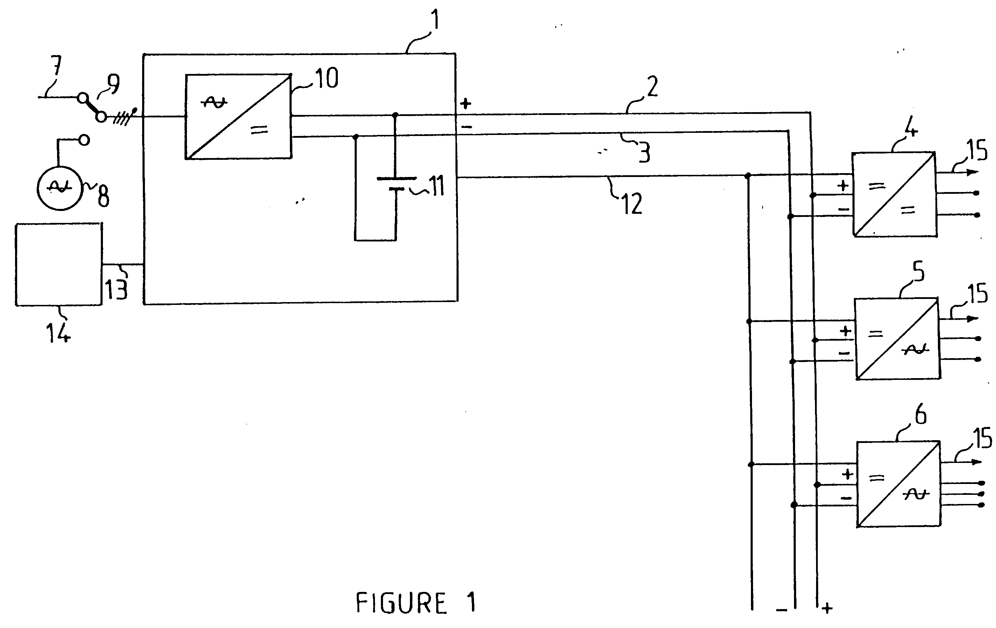

Le système de distribution illustré à la figure 1 comporte un module central 1 alimentant un réseau de distribution de courant continu. La structure du réseau de distribution de courant continu est adaptée à la topologie du site à équiper de manière à distribuer le courant continu vers tous les points d'utilisation, par exemple vers les bureaux d'un bâtiment ou vers les bâtiments sur une zone d'activité. On n'exige pas du réseau de distribution de courant continu de performances élevées car il ne participe pas directement à l'élaboration de la qualité finale. A titre d'exemples, la structure du réseau de distribution de courant continu peut être une structure en étoile, en boucle, en rateau, etc...
Dans le mode de réalisation particulier représenté sur les figures, il est constitué par un bus de distribution de courant continu schématisé par deux conducteurs, respectivement positif (2) et négatif (3). Des modules terminaux, dont trois (4,5,6) sont représentés sur la figure 1, sont connectés au bus de distribution.

Le module central 1 est alimenté en énergie électrique à partir d'un réseau 7 de distribution en courant alternatif. Une source de secours, par exemple un groupe électrogène 8, peut être connectée par l'intermédiaire d'un commutateur 9, à l'entrée du module central en cas de défaillance prolongée du réseau 7.

Le module central 1 comporte essentiellement un convertisseur alternatif continu 10 et une source d'énergie continue autonome, sous forme d'une batterie 11, connectée en parallèle sur la sortie du convertisseur 10. Il constitue ainsi une source d'énergie continue permanente, toujours disponible. L'autonomie de la batterie est adaptée aux conditions d'utilisation du système. Cette autonomie est typiquement variable entre 1 et 120 minutes environ, le groupe électrogène 8 prenant le relais en cas de défaillance prolongée du réseau 7.

A proximité de chaque point d'utilisation, l'énergie, sous forme de courant continu toujours disponible, est transformée localement, individuellement, en une énergie électrique de haute qualité. Ceci est réalisé au moyen de module terminaux, constitués par des convertisseurs continu-continu ou continu-alternatif, de puissance adaptée. Les modules terminaux ont pour fonction, d'une part, d'élaborer la tension haute-qualité adaptée à l'utilisateur associé en termes d'amplitude, de fréquence et de taux de distorsion notamment et, d'autre part, d'assurer l'isolement fonctionnel des utilisateurs les uns vis à vis des autres. La conversion d'énergie à partir d'un réseau de courant continu assure automatiquement l'isolement fonctionnel entre les utilisateurs connectés en aval des différents convertisseurs. En effet, les perturbations, harmoniques, court-circuits, etc.., créées par un utilisateur ne sont pas transmises en amont au réseau de distribution de courant conrtinu et ne peuvent donc être transmises par celui-ci aux autres utilisateurs. De plus, le convertisseur garantit la qualité de l'énergie qu'il fournit en aval même en présence de perturbations sur le réseau continu en amont.

Dans le mode de réalisation particulier représenté à la figure 1, le module terminal 4 est un convertisseur continu-continu fournissant à l'utilisateur associé une énergie électrique continue, qui peut être régulée pour avoir une amplitude prédéterminée. Les modules terminaux 5 et 6 sont des convertisseurs continu-alternatif fournissant respectivement des tensions alternatives monophasée et triphasée, de fréquence et d'amplitude prédéterminées.

Selon leur puissance et la topologie du bâtiment, les modules terminaux sont installés dans un coffret ou directement dans des prises de courant. Un module terminal disposé dans un coffret de branchement peut alimenter, par un réseau local de distribution d'énergie de haute qualité, un certain nombre d'appareils disposés à proximité. Pour éviter une dégradation de la qualité de l'énergie fournie à l'utilisateur, ce réseau local doit être limité en longueur, en nombre de départs et en nombre d'organes de protection.

Les modules terminaux de faible puissance, par exemple de puissance inférieure à 500VA peuvent éventuellement être intégrés dans des prises et peuvent être alimentés à partir d'un bus de distribution répartie, connecté au bus de distribution par un coffret de raccordement et dissimulé dans les plinthes, les faux planchers ou les cloisons du local à alimenter. Dans certains cas, un module terminal peut être intégré directement dans un appareil à alimenter.

Dans tous les cas, il faudra prévoir la mise en place de prises spéciales incompatibles avec les prises ordinaires pour éviter l'alimentation involontaire de charges non sensibles par le système de distribution de haute qualité.

Dans un mode de réalisation préférentiel la tension continue appliquée au bus de distribution par le module central 1 est une tension continue non régulée supérieure au double de la tension alternative maximale devant être disponible en sortie d'un module terminal. Dans le cas où cette tension alternative maximale est de 220V, soit de même ordre que la tension normalement fournie par le réseau de distribution alternatif, la tension continue appliquée au bus est de +/-350V entre les conducteurs 2 et 3. Si la tension continue est plus faible, il est nécessaire d'utiliser dans les convertisseurs continu-alternatif des modules terminaux 4,5, des autotransformateurs, volumineux et coûteux. Par contre, si la tension continue est d'amplitude suffisante,les modules terminaux peuvent comporter des convertisseurs sans transformateur.

Sur la figure 1 un bus de communication, représenté schématiquement en 12, relie le module central 1 à chacun des modules terminaux 4,5 et 6. Le bus 12 peut être constitué par tout bus de communication bidirectionnel de type connu, notamment par les bus de terrain commercialisés sous les marques BATIBUS et J-BUS. Il est ainsi possible de transférer toutes les informations nécessaires entre les modules. Une liaison 13 permet la transmission d'informations entre le module central 1 et un organe de surveillance 14, extérieur au système. L'organe de surveillance 14 peut, alternativement, être connecté au bus de communication 12 sans passer par l'intermédiaire du module central, éventuellement par l'intermédiaire d'une interface entre le bus de communication 12 interne au système et un bus de communication externe qui peut être plus élaboré. Des liaisons 15, par exemple constituées par des bus de communication série, permettent la transmission d'informations entre chacun des modules terminaux et les utilisateurs associés. Une liaison 15 peut, par exemple, être connectée à un serveur de réseau local. Les modules terminaux sont de plus équipés de divers moyens de communication tels que voyants, contacts,...

Les moyens de communication ainsi définis permettent d'assurer une communication interne au système, nécessaire pour coordonner tous les éléments qui le composent. Cette communication interne est de préférence complétée, d'une part, par une communication destinée à l'utilisateur, sous forme audiovisuelle (lampes, alarmes sonores,etc...) et/ou électriques (contacts, liaisons séries), et, d'autre part, par une communication destinée à l'exploitant du système, local ou distant.

Le bus de communication peut être constitué de plusieurs bus pour un système de grande taille ou être remplacé par tout autre moyen de communication, notamment par l'utilisation de la technique des courants porteurs, les informations à transmettre étant alors superposées au courant continu dans le bus de distribution 2,3.

L'organe de surveillance 14 peut comporter un pupitre situé à proximité du module central, pour permettre notamment les opérations de routine ou de vérification. Il peut également comporter des dispositifs de surveillance disposés à distance, notamment chez l'exploitant du système pour avertir celui-ci en cas de problème dans le système. La communication entre le module central, le pupitre local et les dispositifs de surveillance à distance peut être réalisée par tout moyen, par exemple par l'intermédiaire d'un bus comme représenté sur la figure 1, ou par téléphone, radio, minitel, etc...

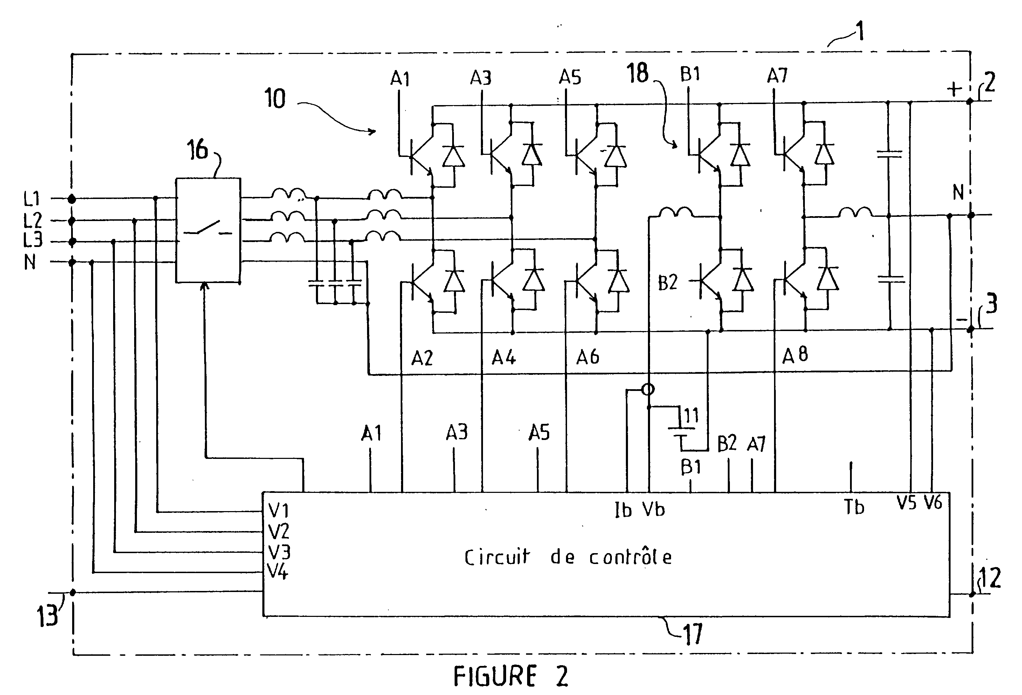

La figure 2 illustre plus en détail un mode de réalisation particulier du module central 1. Le réseau connecté à l'entrée du module est un réseau triphasé L1,L2,L3, avec neutre N. Le convertisseur alternatif-continu 10 est connecté au réseau par l'intermédiaire d'un interrupteur ou d'un disjoncteur 16 pouvant être commandé manuellement ou automatiquement par un circuit de contrôle 17 du module central. Le circuit de contrôle 17 reçoit en entrée des signaux V1 à V4 représentatifs des tensions appliquées à l'entrée du module (en L1,L2,L3 et N) et applique sur des bornes A1 à A8 de commande du convertisseur 10 des signaux de commande appropriés pour fournir les tensions continues désirées au bus de distribution. Le bus de distribution comporte un conducteur positif 2, un conducteur négatif 3, et un conducteur de neutre N connecté directement au neutre du réseau triphasé amont. Le convertisseur 10 est conçu de manière à fournir sur les conducteurs 2 et 3 une tension +/-350V symétrique par rapport au neutre N. Cette symétrie permet de réduire la complexité des modules terminaux.

Le convertisseur peut être commandé par le circuit de contrôle 17 de manière à maintenir un courant sinusoïdal dans le réseau amont. Dans ce but, le circuit 17 est connecté à des capteurs de courant (non représentés) mesurant le courant dans les conducteurs du réseau amont et compensant les perturbations éventuelles de la forme de la sinusoïde.

La batterie 11 est connectée au bus de distribution 2,3,N, par l'intermédiaire d'un circuit chargeur-régulateur 18 dont les bornes de commande B1-B2 reçoivent des signaux de commande du circuit de contrôle 17. En l'absence de défaillance de réseau, la batterie 11 se charge si nécessaire. Le circuit de contrôle 17 contrôle la charge de la batterie en tenant compte de la tension aux bornes de la batterie (entrée Vb du circuit 17) et du courant de charge de la batterie (entrée Ib du circuit 17), de manière à limiter ce courant pendant la charge. Dans le mode de réalisation représenté à la figure 2, la batterie est chargée à partir de la tension continue, mais bien entendu il est possible d'effectuer la charge directement à partir du réseau en utilisant deux redresseurs indépendants, l'un pour la charge de la batterie et l'autre pour l'alimentation du réseau continu.

L'énergie nécessaire est donc prélevée sur le réseau public, ou sur une autre source autonome 8, par un redresseur, de préférence à prélèvement sinusoïdal pour ne pas perturber le réseau alternatif amont. Cette énergie est en partie utilisée localement, dans le module central 1, pour maintenir en charge la batterie 11. La plus grande partie de cette énergie est fournie au réseau de distribution de courant continu sous forme de courant continu rendu disponible, permanent, par la batterie.

Lorsqu'une défaillance du réseau alternatif est détectée par le circuit de contrôle 17 à partir des signaux appliqués sur ses entrées V1-V4, il provoque l'arrêt des signaux de commande appliqués aux bornes A1 à A6 du convertisseur 10. La batterie 11 alimente alors le bus de distribution par l'intermédiaire du chargeur-régulateur 18, sous le contrôle du circuit 17, en fonction des tensions de sortie du module central (entrées V4,V5,V6 du circuit 17). Les signaux de commande des bornes A7 et A8 sont maintenus pour continuer de disposer d'une tension de neutre.

Le circuit de contrôle 17 élabore également des informations représentatives de l'état du réseau alternatif (comparaison des tensions du réseau alternatif à des seuils programmables), du groupe électrogène, du module central et, plus particulièrement du fonctionnement sur source d'énergie autonome. Il surveille notamment l'autonomie de la batterie à partir des mesures de Ib, Vb et de la température de la batterie, qui lui est fournie par un capteur de température sur une entrée Tb. Il élabore un signal de préalarme de fin d'autonomie destiné à informer les utilisateurs de la fin proche de la réserve d'énergie autonome du système. Il peut surveiller également le bon état de fonctionnement du chargeur-régulateur, la température du local batterie, le degré de vieillissement de la batterie. Il peut également réaliser une détection anti-intrusion dans le local technique où il est situé. Ces informations peuvent être transmises aux modules terminaux par le bus de communication 12 et à un organe de surveillance 14 par la liaison 13, le circuit de contrôle 17 comportant les interfaces de communication nécessaires.

De plus, le circuit de contrôle 17 reçoit des informations des modules terminaux par le bus de communication 12 et de l'organe de surveillance 14 par la liaison 13 et peut traiter et transmettre ces informations. A titre d'exemple, il peut recevoir un ordre de passage forcé sur batterie, permettant un test du système, un ordre d'activation d'une sirène anti-intrusion, etc...

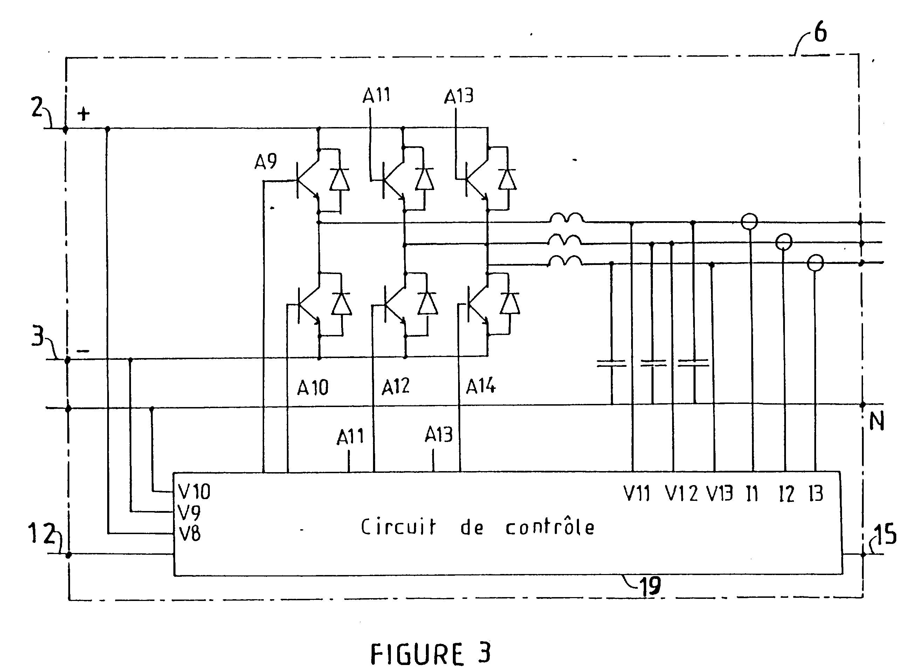

Un module terminal continu-alternatif triphasé est représenté plus en détail sur la figure 3. Il comporte un circuit de contrôle 19 recevant en entrée des signaux représentatifs des tensions continues d'entrée (V8 à V10) qui lui sont appliquées par le bus de distribution, à trois fils (2,3,N) dans le mode de réalisation particulier représenté, des signaux représentatifs des tensions alternatives de sortie (V11 à V13 et V10 pour le neutre commun à l'entrée et à la sortie), des signaux représentatifs des courants de sortie (I1 à I3) ainsi que des informations qui lui sont transmises par le bus 12 et éventuellement par la liaison 15. Le circuit de contrôle 19 élabore à partir de ces signaux d'entrée des signaux A9 à A14 de commande du convertisseur continu-alternatif et des informations représentatives de son état. La transmission des informations se fait par l'intermédiaire d'interfaces de communication appropriées incluses dans le circuit de contrôle 19.

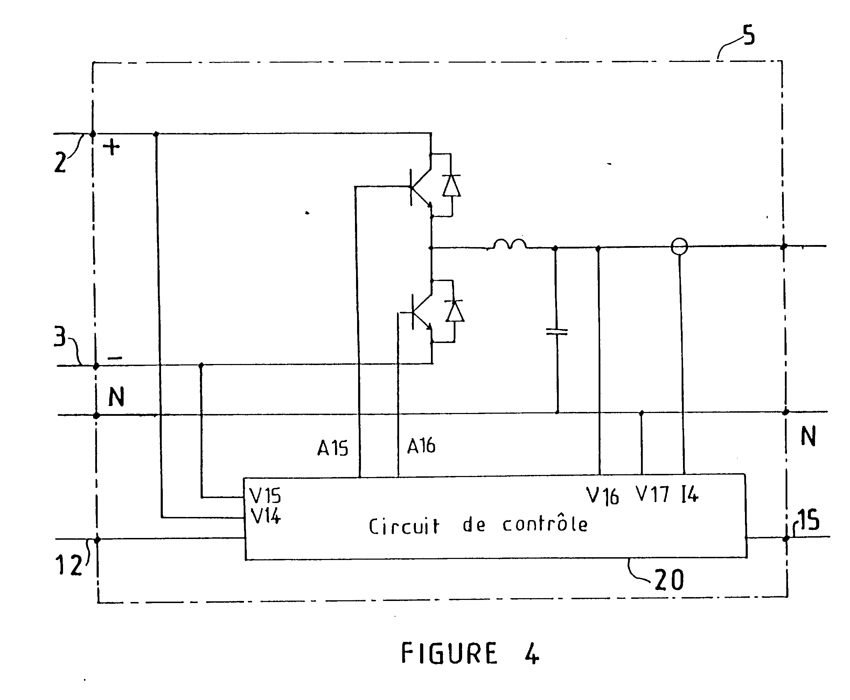

Un module terminal continu-alternatif monophasé est représenté à la figure 4. De manière analogue au précédent, il comporte un circuit de contrôle 20 recevant en entrée des signaux représentatifs des tensions continues d'entrée (V14,V15,V17), des tensions alternatives de sortie (V16,V17), et du courant de sortie (I4), ainsi que des informations transmises par le bus 12 et la liaison 15. Le circuit de contrôle 20 élabore des signaux A15 et A16 de commande du convertisseur continu-alternatif et des informations représentatives de son état. Comme précédemment, les interfaces de communication appropriées sont incluses dans le circuit de contrôle 20.

Les principales informations élaborées par le circuit de contrôle d'un module terminal concernent:
- La présence et le bon fonctionnement du module terminal et de ses organes de communication appartenant au circuit de contrôle. En ce qui concerne les organes de communication il surveille notamment leur alimentation et leur adressage correct. Le module central, ou l'organe de surveillance externe, interroge périodiquement chaque module terminal à cet égard.
- La présence, dans des tolérances prédéterminées, de la tension en aval du module terminal.
- La surveillance du niveau de qualité de la tension, haute qualité, délivrée à l'utilisateur, notamment en terme d'amplitude, de fréquence, d'absence de coupure et de distorsion.
- La présence ou l'absence de surcharges en aval du module terminal, obtenues par la comparaison des signaux représentatifs des courants de sortie (I1 à I3; I4) et de seuils prédéterminés, éventuellement programmables. En cas de surcharge le circuit de contrôle du module terminal peut commander le délestage de certains dispositifs qu'il alimente.
- La présence, dans des tolérances prédéterminées, de la tension continue en amont du module terminal.
- Des informations (tensions, courants ou puissance) permettant un comptage de l'énergie délivrée par le module terminal. Il peut élaborer des impulsions correspondant à une quantité d'énergie consommée prédéterminée, par exemple 1KWh.
- Il transmet également une demande d'arrêt formulée par l'utilisateur, ce qui permet une gestion de l'énergie haute qualité à un niveau hiérarchique supérieur (module central ou organe de surveillance).

Par ailleurs, le circuit de contrôle d'un module terminal reçoit, par le réseau de communication, des informations en provenance du module central, notamment lors du passage de celui-ci en autonomie et en cas de préalarme de fin d'autonomie. Une information de préalarme indique au module terminal concerné qu'il devra automatiquement s'arrêter après un temps prédéterminé, par exemple après 2mn, quel que soit l'état du réseau de distribution de courant continu en amont. Le temps d'autonomie affecté à chaque module terminal lors d'un passage du module central sur batterie peut être personnalisé, en fonction de l'utilisateur qui lui est associé. Cette personnalisation peut être effectuée au niveau de l'organe de surveillance 14, par exemple au moyen d'une table paramétrable indiquant le temps d'autonomie affecté à chaque module terminal. Dans ce cas, un signal de préalarme est élaboré par le module central pour chaque module terminal pour le prévenir de la fin prochaine de son temps d'autonomie et pour tous les modules terminaux lorsque la batterie atteint la fin de son autonomie, comme garde-fou, lors d'une dégradation incontrôlée de la batterie ou lors d'une progammation erronée du temps d'autonomie d'un module donné. Un tel système présente une grande souplesse d'exploitation, et permet de dimensionner la taille de la batterie en cumulant les besoins individuels d'autonomie des utilisateurs. Ceci conduit à une économie importante par rapport à une simple prise en compte d'un temps d'autonomie unique, correspondant au temps d'autonomie nécessaire le plus important, appliqué à l'ensemble des modules terminaux.

Selon un mode de réalisation préférentiel, non représenté, un même bus de communication de type BATIBUS constitue à la fois le bus 12 et la liaison 13, connecté aux modules terminaux et au module central et à une sous-station appartenant à l'organe de surveillance 14. Cette sous-station abrite le logiciel d'application et dialogue avec les autres éléments de l'organe de surveillance 14, par exemple une interface de téléexploitation au moyen d'un bus de terrain de type JBUS. Plusieurs sous-stations peuvent éventuellement être connectées à une même interface de téléexploitation. L'interface de téléexploitation est connectée à divers organes de commande disposés localement, par exemple à une console ou à un minitel, ou à distance, par exemple par l'intermédiaire du réseau téléphonique.

L'organe de surveillance 14 permet ainsi de réaliser un paramètrage local ou à distance du système de distribution d'énergie haute qualité. Il permet, notamment, l'identification des divers modules terminaux, la personnalisation de leurs temps d'autonomie, la définition des informations à considérer comme des évènements, des défauts ou des alarmes, et l'identification des numéros à appeler en cas d'alarme et, éventuellement, leur appel automatique. Il centralise également les informations à consigner et/ou à transmettre et, en particulier, les informations concernant le fonctionnement des divers éléments du système (surcharge, tolérance de qualité,...) et le comptage d'énergie. L'interface de communication est aussi, de préférence, connectée à une imprimante locale permettant la consignation des divers évènements et alarmes chronodatées.

L'organe de surveillance peut également recevoir des appels extérieurs pour consulter l'état du système et, éventuellement, lui donner des ordres, par exemple de marche/arrêt d'un module terminal d'adresse donnée, de test batterie, etc...

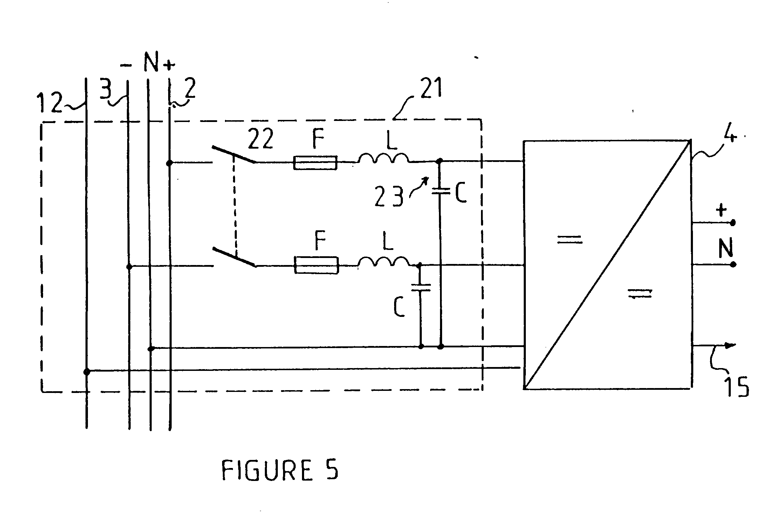

L'utilisation de filtres en amont de chaque module terminal permet de réduire au minimum la pollution du réseau et les perturbations entre utilisateurs. La figure 5 illustre un mode de réalisation préférentiel dans lequel chaque module terminal, dont un seul 4 est représenté, est raccordé au bus de distribution par l'intermédiaire d'un coffret de raccordement 21. Le coffret de raccordement 21 comporte un organe de coupure, interrupteur 22, permettant la mise en ou hors service du module terminal. Cet organe de coupure peut être commandé manuellement ou par télécommande, par exemple dans le cas où un défaut a été détecté dans le fonctionnement du module terminal 4 de manière à isoler celui-ci du système. Le coffret 21 comporte également un filtre passe-bas 23, par exemple de type LC, connecté entre chacun des conducteurs 2 et 3 du bus de distribution et l'entrée correspondante du module. Un organe de protection, par exemple un fusible F, est connecté dans chaque conducteur reliant les conducteurs 2 et 3 du bus de distribution et l'entrée correspondante. Cet organe de protection peut éventuellement être intégré dans le module terminal plutôt que dans le coffret de raccordement.

Pour améliorer la disponibilité du système vu des utilisateurs, on peut utiliser la redondance de certains éléments.

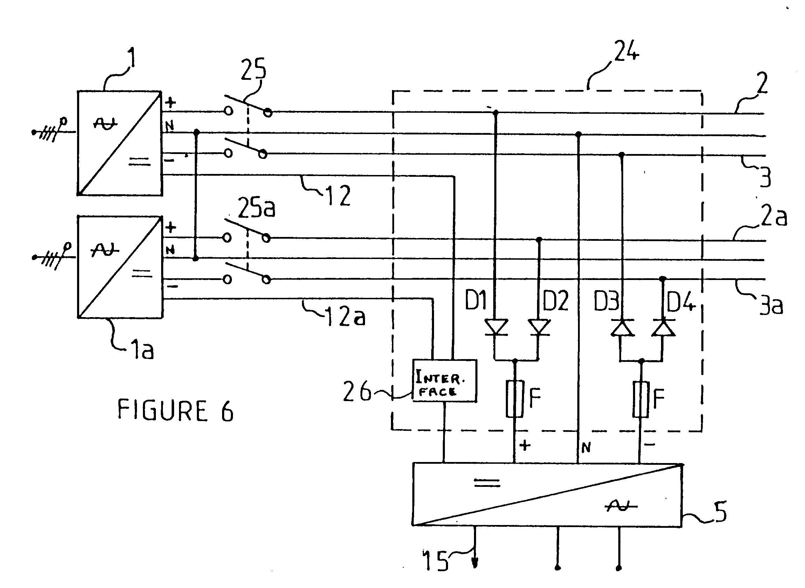

La figure 6 illustre un exemple de système de distribution redondant, comportant deux modules centraux 1 et 1a. Chaque module terminal est connecté en parallèle sur les bus de distribution 2,3,N et 2a,3a,N connectés aux deux modules centraux par un coffret de raccordement 24. Un organe de coupure 25 ou 25a, constitué par un disjoncteur électromécanique ou statique ou par un fusible est disposé sur chacun des conducteurs 2,3,2a,3a des bus de distribution en amont des premiers coffrets de raccordement 24. En cas de défaillance de l'un des modules centraux, l'organe de coupure correspondant est ouvert. Dans le coffret de raccordement, l'entrée positive (+) du module terminal 5 est connectée, par l'intermédiaire d'un fusible F, à la cathode de deux diodes D1 et D2 dont les anodes sont respectivement connectées aux conducteurs 2 et 2a. De même, l'entrée négative (-) du module terminal est connectée, par l'intermédiaire d'un fusible F, à l'anode de deux diodes D3 et D4 dont les cathodes respectives sont connectées aux conducteurs 3 et 3a. L'entrée neutre (N) du module terminal est connectée aux conducteurs de neutre des deux bus, tandis que son entrée de communication est connectée aux bus de communication 12 et 12a associés aux deux modules centraux par l'intermédiaire d'une interface appropriée 26. Celle-ci peut éventuellement être intégrée dans le module terminal. Des interrupteurs similaires aux interrupteurs 22 du coffret de raccordement 21 de la figure 5 peuvent être prévus dans le coffret 24 pour isoler le module terminal des deux bus de distribution. De même des filtres sont de préférence disposés dans le boîtier de raccordement ou intégrés dans le module terminal.

Le principe de redondance peut être appliqué à d'autres éléments du système. Il est ainsi possible de réaliser un système redondant ne comportant qu'un seul module central, mais dont le bus de distribution est dédoublé dès la sortie du module central pour fournir deux bus de distribution auxquels les modules terminaux sont connectés de la même manière que sur la figure 6.

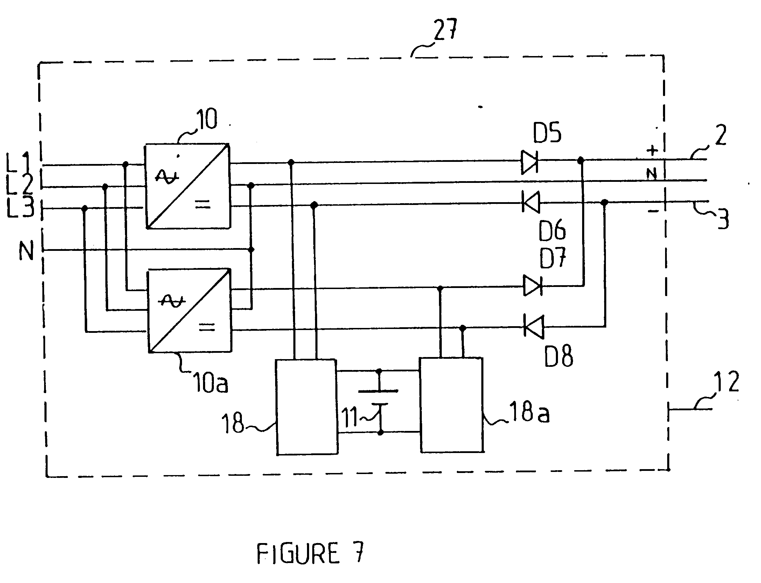

La redondance peut également être utilisée à l'intérieur du module central, comme représenté à la figure 7, notamment pour permettre la maintenance. Deux convertisseurs 10 et 10a sont alimentés par le même réseau alternatif d'entrée L1,L2,L3,N. Leurs sorties sont couplées en parallèle par l'intermédiaire de diodes D5 à D8 pour alimenter un même bus de distribution 2,3,N. Le module central 27 représenté comporte une seule batterie 11 connectée par l'intermédiaire de deux circuits chargeur-régulateur 18 et 18a respectivement aux sorties des deux convertisseurs 10 et 10a, en amont de leur connexion au bus de distribution.

La disponibilité du module central redondant de la figure 7 peut encore être améliorée par l'utilisation dans le module de deux batteries alimentées séparément, l'une par le convertisseur 10, l'autre par le convertisseur 10a.

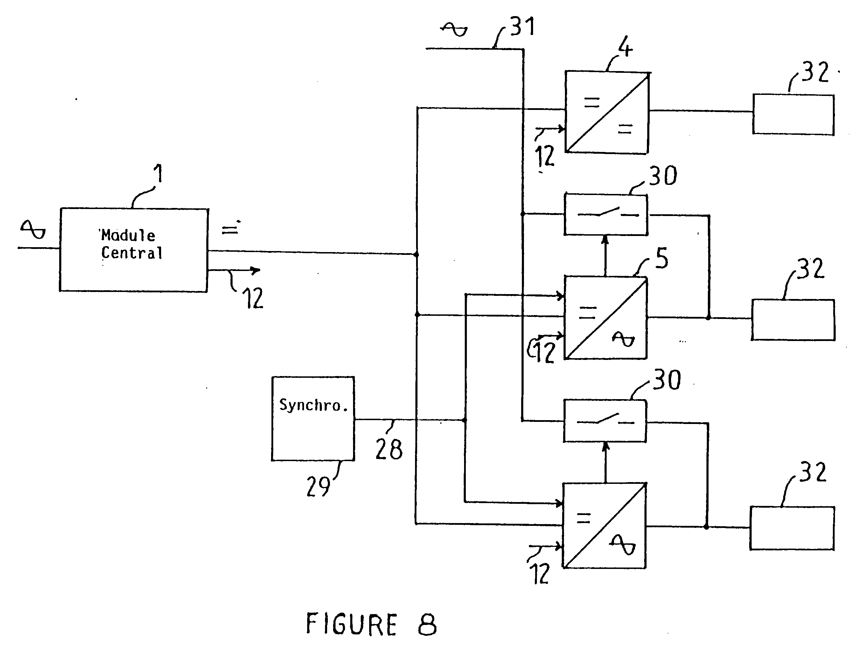

Le système peut, de plus, comporter une liaison 28 de synchronisation (figure 8) connectant une base de temps, servant de source de synchronisation 29, à chacun des modules terminaux comportant un convertisseur continu-alternatif. Physiquement cette base de temps 29 peut éventuellement être disposée dans le module central 1. Le module central 1 envoie, par le bus de communication 12, à chacun des modules terminaux comportant un convertisseur continu-alternatif, des informations lui permettant de se synchroniser, avec un déphasage adapté à chacun des convertisseurs, sur les signaux de synchronisation fournis par la source 29. Le module central peut ainsi répartir temporellement les crêtes de courant absorbées par les différents convertisseurs sur le bus de distribution de courant continu, ce qui permet de minimiser les condensateurs de découplage.

Pour augmenter la disponibilité du système, il est possible de prévoir d'associer un contacteur de secours 30 à chaque convertisseur continu-alternatif. L'entrée des contacteurs de secours 30 est connectée par une liaison 31 à une source de tension alternative, non représentée. Cette source de tension alternative peut être constituée par la sortie d'une alimentation sans coupure classique connectée au réseau alternatif. La sortie d'un contacteur de secours 30 est connectée, en parallèle avec la sortie du convertisseur associé, à l'entrée de l'utilisateur associé 32. Le contacteur de secours 30 est commandé par le circuit de contrôle du module terminal associé, en tenant compte des signaux de synchronisation et des informations fournies au circuit de contrôle par le bus de communication 12, de manière à synchroniser de la manière la mieux appropriée, le passage de l'alimentation de l'utilisateur 32 du module terminal au contacteur de secours ou inversement. Il est ainsi possible de traiter de brèves surcharges ou de secourir le convertisseur en cas de défaillance. Les contacteurs de secours sont de préférence des contacteurs statiques, plus rapides que des contacteurs électromagnétiques.

## Revendications

1. Système de distribution d'énergie électrique à une pluralité d'utilisateurs à partir d'un réseau (7) de distribution d'énergie électrique en courant alternatif, système comportant un module central (1) convertissant le courant alternatif du réseau alternatif en courant continu à et comportant au moins une source d'énergie continue autonome de secours (11) de manière à constituer une source d'énergie continue permanente, un réseau (2, 3, N) de distribution de courant continu connecté au module central (1), une pluralité de modules terminaux (4, 5, 6) connectés au réseau de distribution de courant continu, disposés à proximité des utilisateurs (32) auxquels ils sont connectés et convertissant le courant continu du réseau de distribution de courant continu en courant alternatif (5, 6) ou continu (4) de fréquence et d'amplitude prédéterminées, le système comportant des moyens de communication (12) permettant la communication d'informations représentatives de l'état du système au moins entre chaque module terminal (4, 5, 6) et le module central (1), système caractérisé en ce que les informations représentatives de l'état du système comportent des informations, élaborées par le module central, indiquant le passage du système à un fonctionnement à partir de la source d'énergie autonome (11) et une information de préalarme de fin d'autonomie comportant des signaux de préalarme représentatifs de la fin d'autonomie de chacun des modules terminaux, un temps d'autonomie prédéterminé étant affecté à chacun des modules terminaux.

2. Système selon la revendication 1, caractérisé en ce que l'information de préalarme de fin d'autonomie comporte un signal de préalarme représentatif de la fin d'autonomie de la source d'énergie continue autonome de secours (11).

3. Système selon l'une des revendications 1 et 2, caractérisé en ce que les informations représentatives de l'état du système comportent des informations élaborées par les modules terminaux et représentatives de la présence et du bon fonctionnement des modules terminaux (4, 5, 6).

4. Système selon l'une quelconque des revendications 1 à 3, caractérisé en ce que les informations représentatives de l'état du système comportent des informations élaborées par les modules terminaux et représentatives de la présence, dans des tolérances prédéterminées, d'une tension en amont des modules terminaux (4, 5, 6) et de tension et de courant en aval des modules terminaux.

5. Système selon l'une quelconque des revendication 1 à 4 , caractérisé en ce que les informations représentatives de l'état du système comportent des informations concernant le comptage de l'énergie délivrée par chaque module terminal (4, 5, 6) à l'utilisateur associé.

6. Système selon l'une quelconque des revendications 1 à 5, caractérisé en ce que les moyens de communication sont connectés à un organe de surveillance (14) centralisé externe au système.

7. Système selon l'une quelconque des revendications 1 à 6, caractérisé en ce que le module central (1) fournit une tension continue symétrique par rapport à un neutre (N) du réseau, le réseau de distribution de courant continu comportant trois conducteurs (2, 3, N) dont un conducteur de neutre (N) connecté directement au neutre du réseau.

8. Système selon l'une quelconque des revendications 1 à 7, caractérisé en ce que chaque module terminal (4, 5, 6) est connecté au réseau de distribution de courant continu (2, 3, N) par l'intermédiaire d'un coffret de raccordement associé (21) comportant des filtres passe-bas (23) et des moyens (F) de protection contre les courts-circuits.

9. Système selon l'une quelconque des revendication 1 à 8, caractérisé en ce que les moyens de communication comportent un bus de communication (12) distinct du réseau (2, 3, N) de distribution de courant continu.

10. Système selon l'une quelconque des revendications 1 à 9, caractérisé en ce que la communication est réalisée au moyen de courants porteurs superposés au courant continu sur le réseau (2, 3, N) de distribution de courant continu.

11. Système selon l'une quelconque des revendications 1 à 10, caractérisé en ce qu'il comporte des moyens de synchronisation (28, 29) connectés aux modules terminaux convertissant le courant continu en courant alternatif de manière à leur fournir des signaux de synchronisation, le module central (1) fournissant à chaque module central connecté aux moyens de synchronisation des informations pour se synchroniser, avec un déphasage adapté, sur les signaux de synchronisation.

## Patentansprüche

1. System zur Verteilung elektrischer Energie hoher Qualität an mehrere Verbraucher aus einem elektrischen Wechelstrom-Verteilernetz (7), wobei das System ein den Wechselstrom des Wechselstromnetzes in Gleichstrom umformendes und mindestens eine unabhängige Gleichstrom-Ersatzenergiequelle zur Bildung einer Energiequelle mit ununterbrochen verfügbarer Gleichspannung umfassendes Zentralmodul (1), ein an das Zentralmodul (1) angeschlossenes Gleichstrom-Verteilernetz (2, 3, N), mehrere, an das Gleichstrom-Verteilernetz angeschlossene, in der Nähe der mit ihnen verbundenen Verbraucher (32) angeordnete und den Gleichstrom des Gleichstrom-Verteilernetzes in einen Wechselstrom (5, 6) oder Gleichstrom (4) bestimmter Frequenz und Amplitude umformenden Endmodule (4, 5, 6) sowie Kommunikationsmittel (12) zur Übertragung von den Zustand des Systems abbildenden Informationen mindestens zwischen jedem Endmodul (4, 5, 6) und dem Zentralmodul (1) umfaßt, dadurch gekennzeichnet, daß die den Zustand des Systems abbildenden Informationen vom Zentralmodul erzeugte Informationen, die die Umschaltung des Systems auf einen Betrieb über die unabhängige Energiequelle (11) anzeigen, sowie eine den Ablauf der Autonomiezeit anzeigende Voralarminformation umfassen, welche den Ablauf der Autonomiezeit jedes der Endmodule abbildende Voralarmsignale umfaßt, wobei jedem Endmodul eine bestimmte Autonomiezeit zugeordnet ist.

2. System nach Anspruch 1, dadurch gekennzeichnet, daß die den Ablauf der Autonomiezeit anzeigende Voralarminformation ein Voralarmsignal umfaßt, das den Ablauf der Autonomiezeit der unabhängigen Gleichstrom-Ersatzenergiequelle (11) abbildet.

3. System nach Anspruch 1 und 2, dadurch gekennzeichnet, daß die den Zustand des Systems abbildenden Informationen von den Endmodulen erzeugte Informationen umfassen, die das Vorhandensein und den fehlerfreien Betrieb der Endmodule (4, 5, 6) abbilden.

4. System nach irgendeinem der Ansprüche 1 bis 3, dadurch gekennzeichnet, daß die den Zustand des Systems abbildenden Informationen von den Endmodulen erzeugte Informationen umfassen, die das Vorhandensein und die Einhaltung festgelegter Toleranzgrenzen einer Spannung auf der Einspeiseseite der Endmodule (4, 5, 6) und der Spannung sowie des Stroms auf der Abgangsseite der Endmodule (4, 5, 6) abbilden.

5. System nach irgendeinem der Ansprüche 1 bis 4, dadurch gekennzeichnet, daß die den Zustand des Systems abbildenden Informationen die Messung der von jedem Endmodul (4, 5, 6) an den zugeordneten Verbraucher gelieferten Energie betreffende Informationen umfassen.

6. System nach irgendeinem der Ansprüche 1 bis 5, dadurch gekennzeichnet, daß die Kommunikationsmittel an ein zentrales, systemexternes Überwachungsorgan (14) angeschlossen sind.

7. System nach irgendeinem der Ansprüche 1 bis 6, dadurch gekennzeichnet, daß das Zentralmodul (1) eine in bezug auf den Neutralleiter (N) des Netzes symmetrische Gleichspannung liefert, wobei das Gleichstrom-Verteilernetz drei Leiter (2, 3, N) umfaßt, darunter einen Neutralleiter (N), der direkt mit dem Neutralleiter des Netzes verbunden ist.

8. System nach irgendeinem der Ansprüche 1 bis 7, dadurch gekennzeichnet, daß jedes Endmodul (4, 5, 6) über einen zugeordneten Anschlußkasten (21) mit darin enthaltenen Tiefpaßfiltern (23) und Kurzschluß-Schutzorganen (F) an das Gleichstrom-Verteilernetz (2, 3, N) angeschlossen ist.

9. System nach irgendeinem der Ansprüche 1 bis 8, dadurch gekennzeichnet, daß die Kommunikationsmittel einen, nicht mit dem Gleichstrom-Verteilernetz (2, 3, N) identischen Kommunikationsbus (12) umfassen.

10. System nach irgendeinem der Ansprüche 1 bis 9, dadurch gekennzeichnet, daß die Kommunikation mit Hilfe von Trägerströmen erfolgt, die dem Gleichstrom im Gleichstrom-Verteilernetz (2, 3, N) überlagert werden.

11. System nach irgendeinem der Ansprüche 1 bis 3, dadurch gekennzeichnet, daß es Synchronisiermittel (28, 29) umfaßt, die an die den Gleichstrom in Wechselstrom umformenden Endmodule angeschlossen sind, um ihnen Synchronisiersignale zuzuführen, wobei das Zentralmodul (1) jedem, an die Synchronisiermittel angeschlossenen Endmodul Informationen zu seiner Synchronisierung mit den Synchronisiersignalen bei jeweils angepaßter Phasenverschiebung zuführt.

## Claims

1. A system for distribution of high quality electrical power to a plurality of loads from an AC electrical power distribution network (7), a system comprising a central module (1) converting the alternating current of the AC network into direct current and comprising at least one autonomous back-up DC power source (11) so as to constitute a permanent DC power source, a DC distribution network (2, 3, N) connected to the central module (1), a plurality of terminal modules (4, 5, 6) connected to the DC distribution network, located near the loads (32) to which they are connected and converting the DC current from the DC distribution network into alternating current (5, 6) or direct current (4) of predetermined frequency and amplitude, the system comprising communication means (12) for communicating data representative of the state of the system at least between each terminal module (4, 5, 6) and the central module (1), a system characterized in that the data representative of the state of the system comprises data generated by the central module indicating switching of the system to operation from the autonomous power source (11) and end of back-up time pre-alarm data comprising pre-alarm signals representative of the end of back-up time of the each of the terminal modules, a predetermined back-up time being assigned to each of the terminal modules.

2. The system according to claim 1, characterized in that the end of back-up time pre-alarm data comprises a pre-alarm signal representative of the end of back-up time of the autonomous back-up DC power source (11).

3. The system according to one of the claims 1 and 2, characterized in that the data representative of the state of the system comprises data generated by the terminal modules and representative of the presence and correct operation of the terminal modules (4, 5, 6).

4. The system according to any one of the claims 1 to 3, characterized in that the data representative of the state of the system comprises data generated by the terminal modules and representative of the presence, within preset tolerances, of a voltage line-side of the terminal modules (4, 5, 6) and of voltage and current load-side of the terminal modules.

5. The system according to any one of the claims 1 to 4, characterized in that the data representative of the state of the system comprises data concerning metering of the power delivered by each terminal module (4, 5, 6) to the associated load.

6. The system according to any one of the claims 1 to 5, characterized in that the communication means are connected to a centralized monitoring device (14) external to the system.

7. The system according to any one of the claims 1 to 6, characterized in that the central module (1) supplies a symmetrical DC voltage with respect to a neutral (N) of the AC power system, the DC distribution network comprising three conductors (2, 3, N) including a neutral conductor (N) directly connected to the AC power system neutral.

8. The system according to any one of the claims 1 to 7, characterized in that each terminal module (4, 5, 6) is connected to the DC distribution network (2, 3, N) by means of an associated connection box (21) containing low-pass filters (23) and means (F) for protection against short-circuits.

9. The system according to any one of the claims 1 to 8, characterized in that the communication means comprise a communication bus (12) distinct from the DC distribution network (2, 3, N).

10. The system according to any one of the claims 1 to 9, characterized in that communication is achieved by means of carrier currents superposed on the direct current on the DC distribution network (2, 3, N).

11. The system according to any one of the claims 1 to 10, characterized in that it comprises synchronization means (28, 29) connected to the terminal modules converting the direct current into alternating current so as to supply them with synchronization signals, the central module (1) supplying each central module connected to the synchronization means with data for synchronising, with a suitable phase difference, on the synchronization signals.
